# EUROPÄISCHE PATENTSCHRIFT

(11) **EP 0 927 908 B1**
(45) Veröffentlichungstag und Bekanntmachung des Hinweises auf die Patenterteilung: **17.07.2002**
(21) Anmeldenummer: 98120386.2
(22) Anmeldetag: 28.10.1998
(51) Int. Cl.: G03B 17/30

(54) **Aufnahmeeinrichtung für eine Filmpatrone**
Holding device for a film cassette
Dispositif de retenue pour une cassette de film

(30) Priorität: 31.12.1997 DE 19758328
(43) Veröffentlichungstag der Anmeldung: 07.07.1999
(73) Patentinhaber: Rollei Fototechnic GmbH, 38126 Braunschweig (DE)
(72) Erfinder: Weidmann, Björn, 38106 Braunschweig (DE)
(74) Vertreter: Gramm, Werner, Prof. Dipl.-Ing.

(56) Entgegenhaltungen:
- EP-A- 0 475 740
- US-A- 5 453 806
- US-A- 5 546 150

## Beschreibung

Die Erfindung betrifft eine Aufnahmeeinrichtung für eine Filmpatrone, mit einem lichtdichten Gehäuse, das auch eine Filmtransporteinrichtung umschließt, der ein Erfassungsbereich für den aus der Filmpatrone ragenden Filmanfang zugeordnet ist. Eine solche aufnahmeeinrichtung ist in US-A-5 546 150 (vgl. Abb. 8, 12) gezeigt.

Das genannte lichtdichte Gehäuse kann ein Kamerakörper oder aber ein an diesen ansetzbares Magazin sein. Bei der Filmpatrone handelt es sich vorzugsweise um einen Kleinbildfilm.

Der Erfindung liegt die Aufgabe zugrunde, eine Filmpatronen-Aufnahmeeinrichtung zu entwickeln, die das Einlegen des Films in den Kamerakörper bzw. das Magazin erleichtert.

Ausgehend von der eingangs beschriebenen Aufnahmeeinrichtung wird diese Aufgabe erfindungsgemäß durch folgende Merkmale gelöst:
a) Zum Einlegen bzw. Herausnehmen der Filmpatrone ist die Aufnahmeeinrichtung aus dem Gehäuse unter Parallelversatz der Drehachse der Aufnahmeeinrichtung so herausschwenkbar oder -ziehbar, daß in Offenstellung die eingelegte Filmpatrone von der Filmtransporteinrichtung einen größeren Abstand aufweist als in Schließstellung, wobei der Abstand der eingelegten Filmpatrone von dem genannten Erfassungsbereich in Offenstellung so groß ist, daß sich der aus der Filmpatrone ragende Filmanfang bei kleinster marktüblicher Länge noch bis dicht vor den Erfassungsbereich erstreckt;
b) die Aufnahmeeinrichtung weist einen drehbar gelagerten Patronenmitnehmer auf, der über Form- oder Reibschluß mit der eingelegten Filmpatrone in Drehverbindung steht;
c) beim Schließen der Aufnahmeeinrichtung ist der Patronenmitnehmer unter Einwirkung einer von dem Filmanfang auf das Filmmaul gerichteten Schubkraft in einer der Schließbewegung der Aufnahmeeinrichtung entgegengesetzten Richtung gegen die Wirkung eines federelastischen Elementes in der aufnahmeeinrichtung verdrehbar, das dadurch beim Schließen der Aufnahmeeinrichtung den Filmanfang in dem genannten Erfassungsbereich hält.

Die erfindungsgemäße Ausführungsform stellt sicher, daß durch bloßes Verschwenken oder Verschieben der mit einer eingelegten Filmpatrone bestückten Aufnahmeeinrichtung in ihre Schließstellung ein automatisches Fangen des Filmanfangs durch die Filmtransporteinheit gewährleistet ist. Ein vorheriges gezieltes Plazieren des Filmanfangs auf eine markierte Stelle entfällt. Die unterschiedlichen Längen des aus dem Filmmaul der Patrone ragenden Filmanfangs werden vielmehr selbsttätig kompensiert.

Die Filmpatrone wird in die als Filmklappe oder Filmschublade ausgelegte Aufnahmeeinrichtung eingelegt und dabei in Drehverbindung mit dem Patronenmitnehmer gebracht. Beim Schließen der Aufnahmeeinrichtung 2 bewirkt ein zu langer Filmanfang 6 eine Ausweichdrehung der Filmpatrone mit dem gekoppelten Patronenmitnehmer um die eigene Drehachse. Hierdurch wird das mit dem Patronenmitnehmer in Wirkverbindung stehende federelastische Element gespannt, das dadurch ein auf die Filmpatrone wirkendes Gegenmoment aufbaut. Hierdurch wird ein ständiger Schub des Filmanfangs gegen die z. B. aus einer Stachelwalze mit einer Gegenrolle bestehende Filmtransporteinrichtung erreicht. Dadurch ist zu jeder Zeit garantiert, daß der Filmanfang sicher von der Transporteinrichtung gegriffen werden kann, wobei unterschiedlich lange Filmanfänge automatisch kompensiert werden.

Eine Weiterbildung der erfindungsgemäßen Ausführungsform ist gekennzeichnet durch eine eine Verdrehung der Filmpatrone verhindernde Klinke oder dergleichen, die bei Ausrichtung des Filmmauls der Filmpatrone in einer Linie mit dem Film zur Filmtransporteinrichtung in den Patronenmitnehmer einfällt und durch das Öffnen der Aufnahmeeinrichtung wieder ausgehoben wird. Beim Zurückspulen des Films in die Patrone verhindert die in den Patronenmitnehmer eingefallene Klinke, daß sich die Filmpatrone gegen das von dem federelastischen Element auf Sie ausgeübte Drehmoment um ihre eigene Achse drehen kann.

In der Zeichnung sind einige als Beispiele dienende Ausführungsformen der Erfindung schematisch dargestellt. Es zeigen:
- **Figur 1**: eine aus einem Gehäuse in Offenstellung herausgeschwenkte Aufnahmeeinrichtung mit eingelegter Filmpatrone;
- **Figur 2**: die Ausführungsform gemäß Figur 1 mit der Aufnahmeeinrichtung in Schließstellung.;
- **Figur 3**: in einer Darstellung gemäß Figur 1 eine abgewandelte Ausführungsform, bei der die Aufnahmeeinrichtung mit eingelegter Filmpatrone translatorisch aus dem Gehäuse in Offenstellung herausgezogen ist;
- **Figur 4**: die Ausführungsform gemäß Figur 3 mit der Aufnahmeeinrichtung in ihrer Schließstellung und
- **Figur 5**: in vergrößertem Maßstab die Aufnahmeeinrichtung mit eingelegter Filmpatrone in Draufsicht.

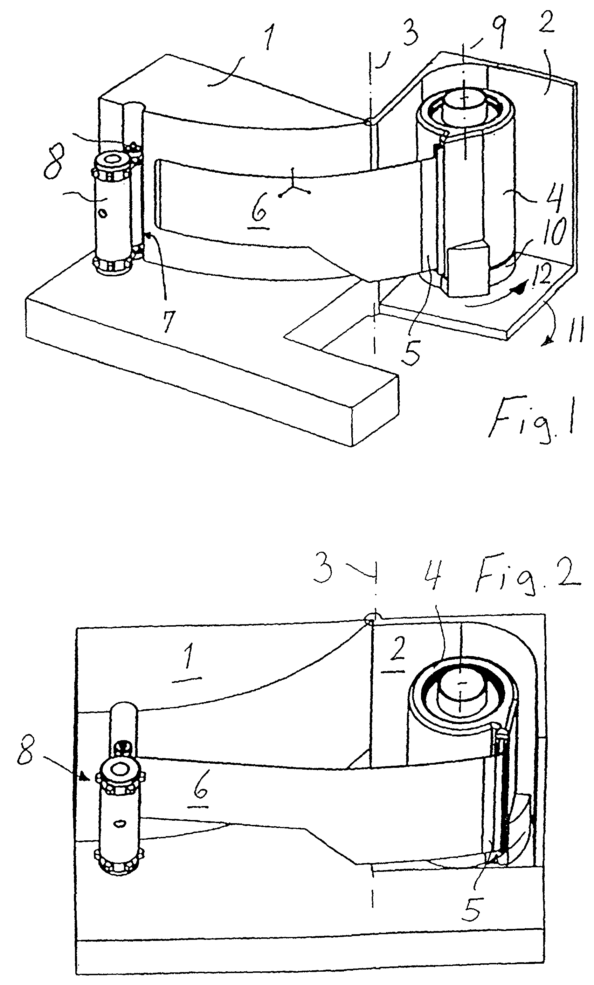

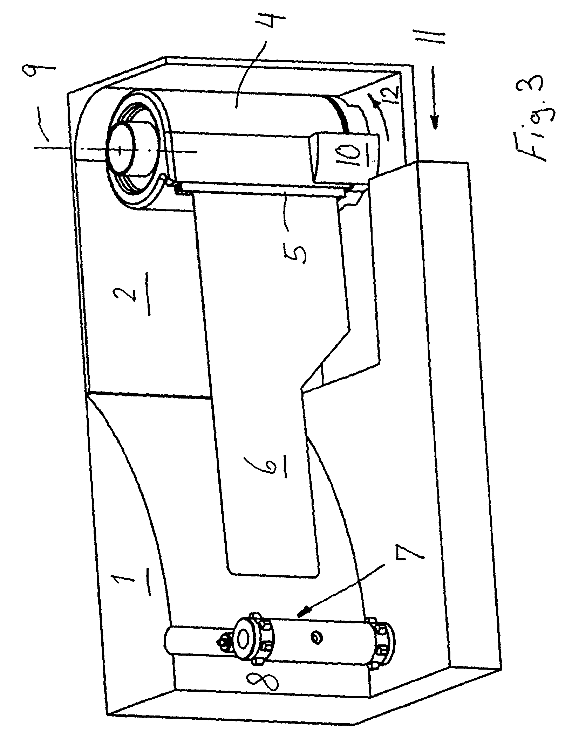

Figur 1 zeigt ein lichtdichtes, nur der besseren Übersichtlichkeit wegen aufgebrochen dargestelltes Gehäuse 1, an das eine Aufnahmeeinrichtung 2 über eine Scharnierachse 3 verschwenkbar angelenkt ist. Figur 2 zeigt die Aufnahmeeinrichtung 2 in ihrer Schließstellung, in der sie das Gehäuse 1 lichtdicht abschließt.

In die Aufnahmeeinrichtung 2 ist eine Filmpatrone 4 eingelegt, deren aus dem Filmmaul 5 ragender Filmanfang 6 bei der in Figur 1 dargestellten Offenstellung der Aufnahmeeinrichtung 2 in einen Erfassungsbereich 7 ragt, der einer Filmtransporteinrichtung 8 zugeordnet ist, die in dem Gehäuse 1 angeordnet und in dem dargestellten Ausführungsbeispiel als Stachelwalze ausgebildet ist.

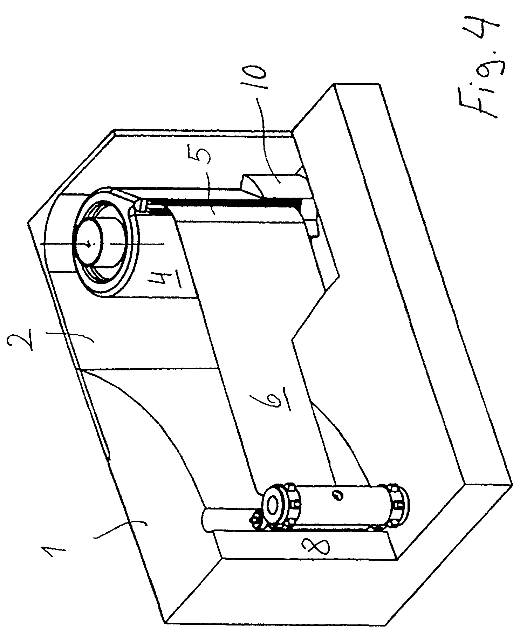

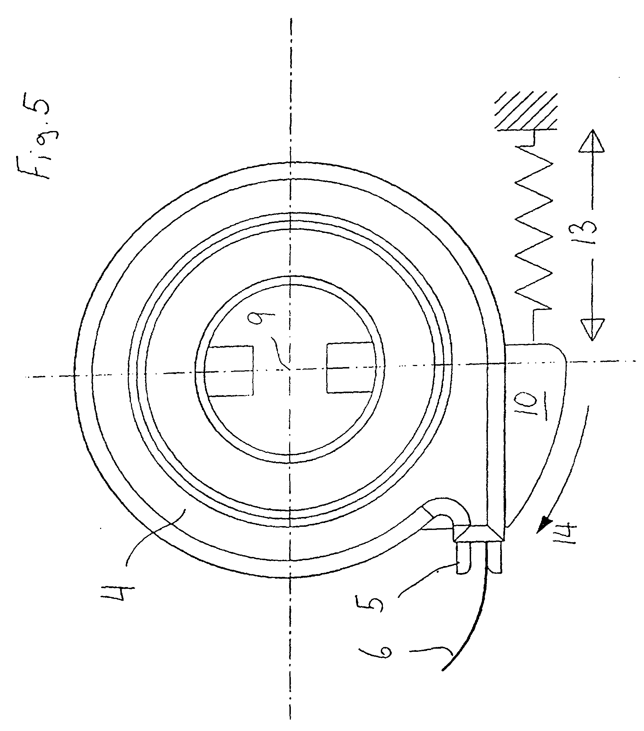

Die in den Figuren 3 und 4 dargestellte Ausführungsform unterscheidet sich von der der Figuren 1 und 2 lediglich dadurch, daß die Aufnahmeeinrichtung 2 aus dem Gehäuse 1 nicht herausklappbar, sondern translatorisch herausziehbar ist. Figur 3 zeigt demnach die Aufnahmeeinrichtung 2 in voll herausgezogener Stellung (Offenstellung), während die Figur 4 die Aufnahmeeinrichtung 2 in vollständig eingeschobener Lage (Schließstellung) zeigt.

Die Figuren 1 und 3 lassen erkennen, daß die Aufnahmeeinrichtung 2 aus dem Gehäuse 1 unter Parallelversatz der Drehachse 9 der Aufnahmeeinrichtung 2 so herausschwenkbar bzw. -ziehbar ist, daß in Offenstellung die eingelegte Filmpatrone 4 von der Filmtransporteinrichtung 8 einen größeren Abstand aufweist als in Schließstellung. Dabei ist der Abstand der eingelegten Filmpatrone 4 von dem genannten Erfassungsbereich 7 in Offenstellung so groß, daß sich der aus der Filmpatrone 4 ragende Filmanfang 6 bei kleinster marktüblicher Länge noch bis dicht vor den Erfassungsbereich 7 erstreckt.

Die Aufnahmeeinrichtung 2 weist einen drehbar gelagerten Patronenmitnehmer 10 auf, der über einen nicht näher dargestellten Form- oder Reibschluß mit der eingelegten Filmpatrone 4 in Drehverbindung steht. Beim Schließen der Aufnahmeeinrichtung 2 ist der Patronenmitnehmer 10 unter Einwirkung einer von dem Filmanfang 6 auf das Filmmaul 5 gerichteten Schubkraft - die sich aus der Anlage des Filmanfangs 6 an der Filmtransporteinrichtung 8 ergibt - in einer der Schließbewegung 11 der Aufnahmeeinrichtung 2 entgegengesetzten Richtung 12 gegen die Wirkung eines federelastischen Elementes 13 verdrehbar, das dadurch beim Schließen der Aufnahmeeinrichtung 2 den Filmanfang 6 in dem genannten Erfassungsbereich 7 hält. In Figur 5 gibt der Pfeil 14 die freie Drehrichtung der Filmpatrone 4 an, der die in den Figuren 1 und 3 mit dem Pfeil 12 eingezeichnete Ausweichbewegung der Filmpatrone 4 entgegengerichtet ist.

Vorgesehen ist ferner eine eine Verdrehung der Filmpatrone 4 verhindernde, in der Zeichnung nicht näher dargestellte Klinke oder dergleichen, die bei Ausrichtung des Filmmauls 5 der Filmpatrone 4 in einer Linie mit dem Film zur Filmtransporteinrichtung 8 in den Patronenmitnehmer 10 einfällt und durch das Öffnen der Aufnahmeeinrichtung 2 wieder ausgehoben wird.

## Patentansprüche

1. Aufnahmeeinrichtung für eine Filmpatrone (4), als Teil eines lichtdichten Gehäuses (1), das auch eine Filmtransporteinrichtung (8) umschließt, der ein Erfassungsbereich (7) für den aus der Filmpatrone (4) ragenden Filmanfang (6) zugeordnet ist,
**gekennzeichnet durch** folgende Merkmale:
a) Zum Einlegen bzw. Herausnehmen der Filmpatrone (4) ist die Aufnahmeeinrichtung (2) aus dem Gehäuse (1) unter Parallelversatz der Drehachse (9) der Aufnahmeeinrichtung (2) so herausschwenkbar oder -ziehbar, daß in Offenstellung die eingelegte Filmpatrone (4) von der Filmtransporteinrichtung (8) einen größeren Abstand aufweist als in Schließstellung, wobei der Abstand der eingelegten Filmpatrone (4) von dem genannten Erfassungsbereich (7) in Offenstellung so groß ist, daß sich der aus der Filmpatrone (4) ragende Filmanfang (6) bei kleinster marktüblicher Länge noch bis dicht vor den Erfassungsbereich (7) erstreckt;
b) die Aufnahmeeinrichtung (2) weist einen drehbar gelagerten Patronenmitnehmer (10) auf, der über Form- oder Reibschluß mit der eingelegten Filmpatrone (4) in Drehverbindung steht;
c) beim Schließen der Aufnahmeeinrichtung (2) ist der Patronenmitnehmer (10) unter Einwirkung einer von dem Filmanfang (6) auf das Filmmaul (5) gerichteten Schubkraft in einer der Schließbewegung (11) der Aufnahmeeinrichtung (2) entgegengesetzten Richtung (12) gegen die Wirkung eines federelastischen Elementes (13) in der aufnahmeeinrichtung verdrehbar, das **dadurch** beim Schließen der Aufnahmeeinrichtung (2) den Filmanfang (6) in dem genannten Erfassungsbereich (7) hält.

2. Aufnahmeeinrichtung nach Anspruch 1, **gekennzeichnet durch** eine eine Verdrehung der Filmpatrone (4) verhindernde Klinke oder dergleichen, die bei Ausrichtung des Filmmauls (5) der Filmpatrone (4) in einer Linie mit dem Film zur Filmtransporteinrichtung (8) in den Patronenmitnehmer (10) einfällt und **durch** das Öffnen der Aufnahmeeinrichtung (2) wieder ausgehoben wird.

## Claims

1. Holding device for a film cassette (4), as part of a light-tight casing (1) which also encloses a film-transporting device (8) associated with which is a picking-up region (7) for that leading end (6) of the film which protrudes from the film cassette (4),
**characterised by** the following features:
a) for the purpose of inserting or removing the film cassette (4), the holding device (2) can be pivoted or pulled out of the casing (1) in such a way, with parallel displacement of the axis of rotation (9) of the said holding device (2), that in the open position, the inserted film cassette (4) is at a greater distance from the film-transporting device (8) than in the closed position, the distance of the inserted film cassette (4) from the aforesaid picking-up region (7) in the open position being such that, for the smallest usual length thereof on the market, the leading end (6) of the film which protrudes from the film cassette (4) still extends to a point just in front of the picking-up region (7);
b) the holding device (2) has a rotatably mounted cassette-driver (10) which is in rotational connection, as a result of form locking or friction locking, with the inserted film cassette (4) ;
c) during the closing of the holding device (2), the cassette-driver (10) can be twisted, under the effect of a thrusting force directed from the leading end (6) of the film towards the film opening (5), in a direction (12) counter to the closing movement (11) of the holding device (2), against the action of an elastic spring element (13) in the holding device, which element thereby keeps the leading end (6) of the film in the aforesaid picking-up region (7) during the closing of the holding device (2).

2. Holding device according to claim 1, **characterised by** a pawl or the like which prevents twisting of the film cassette (4) and which, on alignment of the film opening (5) of the film cassette (4) in line with the film to the film-transporting device (8), engages in the cassette-driver (10), and which is lifted out again by the opening of the holding device (2).

## Revendications

1. Dispositif de retenue pour une cassette de film (4), en tant que partie d'un boîtier étanche à la lumière (1), qui renferme également un dispositif d'avancement du film (8) auquel est associée une zone d'interception (7) pour une amorce du film (6) émergeant la cassette de film (4),
**caractérisé par** les particularités suivantes:
a) pour l'insertion et l'extraction de la cassette de film (4), le dispositif de retenue (2) peut pivoter ou être tiré vers l'extérieur avec déplacement parallèle de l'axe de rotation (9) du dispositif de retenue (2) de telle façon qu'en position ouverte la cassette de film installée (4) se trouve à plus grande distance du dispositif d'avancement du film (8) qu'en position fermée, étant précisé qu'en position ouverte la distance entre la cassette de film installée (4) et la zone d'interception précitée (7) est telle que l'amorce du film (6) émergeant de la cassette de film (4) lorsqu'elle présente la longueur minimale usuellement rencontrée dans le commerce, s'étend encore jusque devant la zone d'interception (7);
b) le dispositif de retenue (2) présente un dispositif d'entraînement de cassette (10), supporté en rotation, qui est lié en rotation par une liaison d'interpénétration ou de friction avec la cassette de film installée (4);
c) lors de la fermeture du dispositif de retenue (2), le dispositif d'entraînement de cassette (10) est susceptible d'être soumis à une rotation dans le dispositif de retenue sous l'effet d'une poussée dirigée de l'amorce du film (6) vers l'ouverture de dévidement du film (5), dans une direction (12) opposée au mouvement de fermeture (11) du dispositif de retenue (2) et à l'encontre de l'effet d'un élément élastique (13), qui maintient ainsi l'amorce du film (6) dans ladite zone d'interception (7) lors de la fermeture du dispositif de retenue (2).

2. Dispositif de retenue selon la revendication 1, **caractérisé par** un cliquet ou analogue empêchant que la cassette de film (4) subisse une rotation, lequel cliquet s'enclenche dans le dispositif d'entraînement de cassette (10) lors de l'alignement de l'ouverture de dévidement du film (5) de la cassette de film (4) en ligne avec le film vers le dispositif d'avancement du film (8), et en est extrait par ouverture du dispositif de retenue (2).
